# EUROPEAN PATENT SPECIFICATION

(11) **EP 3 147 164 B1**
(45) Date of publication and mention of the grant of the patent: **05.06.2019**
(21) Application number: 14892660.3
(22) Date of filing: 10.11.2014
(51) Int. Cl.: A62B 3/00

(54) **FIXED TYPE APPARATUS FOR DESTROYING GLASS**
BEFESTIGBARE VORRICHTUNG ZUR ZERSTÖRUNG VON GLAS
APPAREIL DE TYPE FIXE POUR DÉTRUIRE DU VERRE

(30) Priority: 22.05.2014 US 201414285241; 05.06.2014 KR 20140068221
(43) Date of publication of application: 29.03.2017
(73) Proprietor: Kim, Jung Sik, Irving, Texas 75063 (US)
(72) Inventor: Kim, Jung Sik, Irving, Texas 75063 (US)
(74) Representative: Pfenning, Meinig & Partner mbB
(86) International application number: PCT/KR2014/010727
(87) International publication number: WO 2015/178550

(56) References cited:
- EP-A2- 1 106 407
- WO-A2-2011/052912
- CN-A- 103 112 424
- CN-U- 203 093 978
- FR-A- 1 058 367
- JP-A- H08 164 809
- JP-A- 2002 011 107
- KR-A- 20100 025 399
- US-A1- 2005 082 331

## Description

### [Technical Field]

Embodiments of the present invention relate to a glass breaking tool, and more particularly, to a fixed-type glass breaking apparatus that is usable in a fixed state.

### [Background Art]

Of some uses, it is necessary to provide glass which is strong and resilient to breaking. One such use is in automobiles, trucks, buses, and all kinds of vessels. The glass in these vehicles are subject to strong influences and must be resilient to breaking. However, this feature is not desirable in all circumstances. For instance, after an accident, it may be desirable for the glass to be broken in order that the occupants of the vehicle in the accident can escape. This is especially important when the vehicle has entered the water or is subject to fire. Under these circumstances, it is imperative that the glass be broken for the occupants to escape unharmed.

In the past, a hammer and so on may be provided in order to allow the occupants to break the glass of the vehicle. However, the occupants may not have sufficient strength to break the glass of the vehicle. This is especially true when the occupants are small children or when the vehicle is submerged where the pressure of the water acts to strengthen the glass. Buses and trains have a system to open windows by turning an opening handle and pushing the window. But in the case of an accident in water, it may not be easy to open the window due to water pressure. In particular, during an emergency, there is a greater risk when many people gather near an emergency exit. There is a need for anyone can break the glass in a short amount of time, for example 10 seconds, and exit.

FR 1 058 367 describes a device for breaking glass in case of an emergency. The device comprises a plate which may be fixed to the window glass and a screw screwed into the plate. A conical tip, made of hardened steel, is formed at the end of the screw and the glass may be broken by tightening the screw. To CN 203 093 987 U discloses a different tempered glass or window glass breaking and disassembling device. Further prior art useful for understanding the current invention is disclosed in EP 1 106 407 A2 and WO 2011/052912 A2. The present invention can prevent the loss of many lives such as occurred during the Sewol vessel accident in Korea.

### [Disclosure]

### [Technical Problem]

Therefore, it is an aspect of the present invention to provide a glass breaking apparatus previously installed in a vehicle having a tempered glass and having a structure that is capable of easily breaking tempered glass with a smallest force of a person aboard a vehicle having a tempered glass in a fixed state without being separated from the vehicle, the glass breaking apparatus.

It is an aspect of the present invention to provide a glass breaking structure that enables anyone to break tempered glass within a short amount of time, for example, several seconds to several tens of seconds.

It is an aspect of the present invention to provide a glass breaking apparatus having a structure that ensures enhanced cost efficiency than the current emergency exit systems that are applied to the current vehicles.

It is an aspect of the present invention to provide a glass breaking apparatus having a structure that is easily attached to vehicles already being operated.

Additional aspects of the disclosure will be set forth in part in the description which follows and, in part, will be obvious from the description, or may be learned by practice of the disclosure.

### [Technical Solution]

In accordance with one aspect of the present invention, a fixed-type glass breaking apparatus according to claim 1 is proposed for breaking tempered glass composing a window of a vehicle including an attachment device and a damaging device. The attachment device is configured to be installed such that at least a part thereof is in surface contact with a surface of the tempered glass. The damaging device is mounted in the attachment device such that, when the surface of the tempered glass is in surface contact with the attachment device, the damaging device is in a perpendicular direction to the surface contacted tempered glass surface to form a crack on the tempered glass surface.

The damaging device includes a rotational axis part which is coupled to the attachment device to rotate with respect to the attachment device, and a cutting edge part which is installed on one end of two ends of the rotational axis part. The one end is adjacent to the attachment device.

The fixed-type glass breaking apparatus further includes a handling device which is installed at the other end of the rotational axis part in order to apply a force for rotating the rotational axis part.

The handling device includes a handle sleeve which is threadably coupled to the other end of the rotational axis part, and a pivot handle connected to the handle sleeve.

The rotational axis part further has a hollow part into which the pivot handle is inserted, wherein the hollow part has a biasing device to be inserted therein.

The attachment device may be installed in a direction of a frame to be in surface contact with a part inserted into the frame composing the window of the tempered glass surface.

The attachment device may be a plate having a certain thickness or a plate type three dimensional structure that includes a top plate is spaced apart from a bottom plate in surface contact with the tempered glass surface in parallel to the bottom plate so that an interior space is formed, wherein the plate or the plate type three dimensional structure has a through hole to which the damaging device is mounted.

The rotational axis part may include a support cylinder structure having a thread portion formed on the exterior surface thereof to be threadably coupled with the attachment device, and a rotating shaft structure which is threadably coupled with threads formed at an inside hollow part of the support cylinder structure.

The rotational axis part may move between a first position which is not in contact with the tempered glass surface and a second position which is in contact with the tempered glass surface through a rotation by the handling device to form a crack.

### [Advantageous Effects]

As is apparent from the above, the fixed-type glass breaking apparatus according to the present invention can be used during an emergency of a vessel, vehicle or train for occupants to escape by breaking glass fast and easily.

The fixed-type glass breaking apparatus according to the present invention can be easily used to break all types of tempered glass regardless of the thickness of glass and thus provide a cost-effective solution as compared with the current emergency exit systems.

The fixed-type glass breaking apparatus according to the present invention can be easily installed in all types of vehicles including vessels, trains or anywhere else where the window is installed, and also applied to vehicles that are already being operated.

The fixed-type glass breaking apparatus according to the present invention that is fixed to a side of a window frame without being detached can ensure safety at normal times and be used to break tempered glass with a small force of about 25 pounds at an emergency, especially useful when an accident occurs under the water.

### [Description of Drawings]

FIG. 1 is a side view illustrating an attachment plate as an embodiment of an attachment device according to the present invention;
FIG. 2 is a plan view illustrating the attachment plate shown in FIG. 1;
FIG. 3 is a cross-sectional view illustrating a connecting cylinder as an embodiment of a rotational axis part of a damaging device according to the present invention;
FIG. 4 is an end view illustrating the connecting cylinder shown in FIG. 3;
FIG. 5 is a side view illustrating the connecting cylinder shown in FIG. 3;
FIG. 6 is a cross-sectional view illustrating a sliding shaft that is an embodiment of a rotational axis part of a damaging device according to the present invention;
FIG. 7 is an end view illustrating the sliding shaft shown in FIG. 6;
FIG. 8 is a side view illustrating an embodiment of a biasing device of a damaging device according to of the present invention;
FIG. 9 is a side view illustrating a pivoting handle included in an embodiment of a handling device of the present invention;
FIG. 10 is a side view illustrating a handle sleeve included in an embodiment of a handling device of the present invention;
FIG. 11 is an end view illustrating the handle sleeve shown in FIG. 10;
FIG. 12 is a cross-sectional view illustrating the handle sleeve shown in FIG. 10;
FIG. 13 is a cross-sectional view illustrating an embodiment of a retaining plate that is used in a fixed-type glass breaking apparatus of the present invention;
FIG. 14 is an end view illustrating the retaining plate shown in FIG. 13;
FIG. 15 is an end view illustrating the retaining plate shown in FIG. 13;
FIG. 16 is a view illustrating an embodiment of a cover and a pin device that are used in a fixed-type glass breaking apparatus of the present invention;
FIG. 17 is a cross-sectional view illustrating the cover shown in FIG. 16;
FIG. 18 is a cross-sectional view illustrating the pin device shown in FIG. 16;
FIG. 19 is an exploded view illustrating an embodiment of a fixed-type glass breaking apparatus according to the present invention;
FIG. 20 is an assembled view of the fixed-type glass breaking apparatus shown in FIG. 19;
FIG. 21 is a view illustrating a window, a window frame and a fixed-type glass breaking apparatus according to the present invention installed on the window;
FIG. 22 is a cross-sectional view illustrating a sliding shaft at a first position of the fixed-type glass breaking apparatus installed as in FIG. 21 at a normal time; and

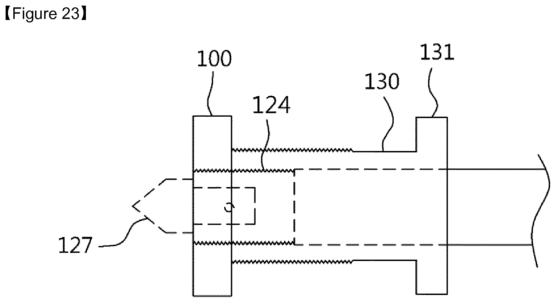

FIG. 23 is a cross-sectional view illustrating a sliding shaft at a second position of the fixed-type glass breaking apparatus installed as in FIG. 21 in which tempered glass can be broken at an emergency.

### [Mode for Invention]

The terminology used herein is defined in consideration of its function in the present invention, and may vary with an intention of a user and an operator or custom. In case that terminologies designated by the application may be used, the detailed meaning of the terminology may be defined in the specification. Accordingly, the definition of the terminologies used herein should be determined based on the general meaning of the terminologies and overall contents of the specification rather than the terminologies themselves.

Toughened glass represents glass, such as tempered glass and laminated glass, which is treated with heat to increase its strength and also to be broken as a whole with a partial damage.

Hereinafter, the present invention will be described in detail with reference to the accompanying drawings and embodiments.

The embodiments of the present invention may be embodied in many alternate forms and should not be construed as limited to the embodiments of the present invention set forth herein. Like numbers refer to like elements throughout the description of the figures.

The present invention is characterized with a fixed-type glass breaking apparatus having a structure capable of rapidly breaking tempered glass composing a window of a vehicle with only a small force applied by an occupant in a state that the fixed-type glass breaking apparatus is fixed to the vehicle.

That is, the fixed-type glass breaking apparatus according to the present invention has a structure easily and rapidly breaking tempered glass regardless of a water pressure applied from outside of the vehicle by a user applying a small force to turn a handle in a state the fixed-type glass breaking apparatus is installed without being separated from the vehicle, unlike the conventional glass breaking apparatus provided on the vehicle, for example, a hammer.

Accordingly, the fixed-type glass breaking apparatus according to the present invention, which is an apparatus for breaking tempered glass composing a window of a vehicle includes: an attachment device installed such that at least a part thereof is in surface contact with a surface of the tempered glass; and a damaging device mounted in the attachment device in a perpendicular direction to the surface contacted- tempered glass surface to form a crack on the tempered glass surface.

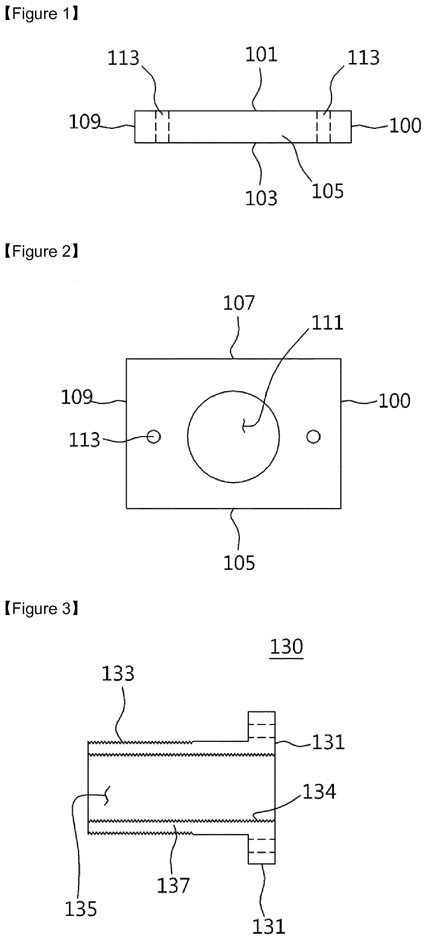

The attachment device may be installed in a direction of a frame to be in surface contact with a part of the glass inserted into the frame composing the window to enhance the aesthetic quality. The attachment device may be a plate having a certain thickness as shown in FIGS. 1 and 2. Although not shown, the attachment device may be provided as a plate type three dimensional structure that includes a top plate is spaced apart from a bottom plate in surface contact with the tempered glass surface in parallel to the bottom plate so that an interior space is formed.

When the attachment device is provided as the plate or the plate type three dimensional structure, there is a need to mount the damaging device. Therefore, the attachment device has a through hole to which the damaging device is mounted in a perpendicular direction to a surface of the tempered glass that is in surface contact with the attachment device.

FIG. 1 is a side view illustrating an attachment plate 100 that is an embodiment of an attachment device according to the present invention, and the attachment plate 100 may be used to attach to an interior wall adjacent to glass. The attachment plate 100 may include a top surface 101 opposed to a bottom surface 103 which may be connected to a front surface 105 and a back surface 107 and which may be connected to a pair of opposing side surfaces 109. The attachment plate 100 may include a rectangular cross-section or other shapes. The back surface 107 may be a mirror of the front surface 105. The peripheral walls which define the center aperture 111 may be threaded in order to connect to a connecting cylinder 130 that is an embodiment of a damaging device (not shown in FIG. 1 or FIG. 2).

FIG. 2 is a plan view illustrating the attachment plate 100 shown in FIG. 1, and the attachment plate 100 may be used to attach to an interior wall adjacent to glass. The attachment plate 100 may include a top surface 101 opposed to a bottom surface 103 which may be connected to a front surface 105 and a back surface 107 and which may be connected to a pair of opposing side surfaces 109. The attachment plate 100 may include a rectangular cross-section or other shapes. The back surface 107 may be a mirror of the front surface 105 and the bottom surface 103 may be a mirror of the top surface 101.

The attachment plate 100 may include a center aperture 111 which may extend through the top surface and the bottom surface to cooperate with a striking shaft 120 that is another embodiment of the damaging device (not shown in FIGS. 1 and 2). In addition, the attachment plate 101 may include mounting apertures 113 which may extend through the top surface and the bottom surface to mount the attachment plate 100 to a side of a window frame.

The damaging device of the fixed-type glass breaking apparatus according to the present invention is a component mounted on the attachment device in a perpendicular direction to the surface contacted tempered glass surface to form a crack on a surface of tempered glass composing a window. The damaging device is not limited as long as it forms a crack on the tempered glass surface. According to an embodiment, the damaging device may include a rotational axis part .coupled to the attachment device so as to be rotated with respect to the attachment device and a cutting edge part installed at one end adjacent to the attachment device of both ends of the rotational axis part.

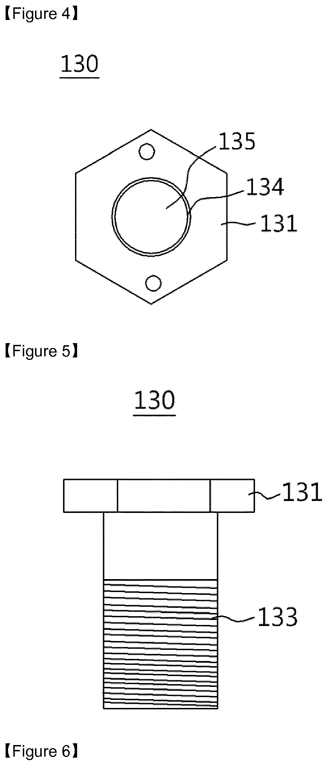

The rotational axis part may include: a support cylinder structure having a threaded portion formed on the exterior surface thereof to be threadably coupled with the attachment device; and a rotating shaft structure which is threadably coupled with threads formed at an inside hollow part of the support cylinder structure. A connecting cylinder 130 is illustrated in FIGS. 3 to 5 as an embodiment of implementing the support cylinder structure, a sliding shaft 120 is illustrated in FIG. 6 as an embodiment of implementing the rotating shaft structure, and a shaft blade 127 is illustrated in FIG. 6 as an embodiment of implementing the cutting edge part. If necessary, the rotational axis part may only include the rotating shaft structure. In addition, the shaft blade 127 may be formed of diamond.

FIG. 3 is a cross-sectional view illustrating the connecting cylinder 130 that is an embodiment of a support cylinder structure of a rotational axis part forming the damaging device damaging device according to the present invention.

With reference to FIG. 3, the connecting cylinder 130 may include a multi-sided flange 131 which may be used with a wrench tool (not shown) to tighten and threadably connect to the attachment plate 100 and which may be positioned on an end of the connecting cylinder 130. The connecting cylinder 130 may include a cylinder aperture 135 which may extend through the connecting cylinder 130 to cooperate with a sliding shaft 120. The connecting cylinder 130 may include a threaded portion 133 formed on the exterior surface of the connecting cylinder 130 to threadably connect to the attachment plate 100. A peripheral cylinder wall 137 may define the cylinder aperture 135. The interior surface of the peripheral cylinder wall 137 may include threads 134 to threadably connect to the sliding shaft 120.

FIG. 4 is an end view illustrating the connecting cylinder 130 that is an embodiment of a support cylinder structure of a rotational axis part forming the damaging device of the fixed-type glass breaking apparatus according to the present invention. With reference to FIG. 4, the connecting cylinder 130 may include a cylinder aperture 135 which may extend through the connecting cylinder 130 to cooperate with the sliding shaft 120. A peripheral cylinder wall 137 may define the cylinder aperture 135. The interior surface of the peripheral cylinder wall 137 may include threads 134 to threadably connect to the sliding shaft 120.

FIG. 5 is a side view illustrating the connecting cylinder 130 that is an embodiment of a support cylinder structure of a rotational axis part forming the damaging device of the fixed-type glass breaking apparatus according to the present invention. The connecting cylinder 130 may include a cylinder aperture 135 which may extend through the connecting cylinder 130 to cooperate with the sliding shaft 120. The connecting cylinder 130 may include a threaded portion 133 which may include a thread portion formed on the exterior surface of the connecting cylinder 130 to threadably connect to the attachment plate 100.

FIG. 6 is a cross-sectional view illustrating the sliding shaft 120 that is an embodiment of a rotational axis part of a damaging device according to the present invention.

With reference to FIG. 6, the sliding shaft 120 may cooperate with the cylinder aperture 135 of the connecting cylinder 130 (not shown in FIG. 6) and may include a shaft aperture 125 which may extend through the sliding shaft 120 and a biasing device 123 that may be positioned within the shaft aperture 125 to cooperate with the shaft aperture 125. The biasing device may include an elastic body having a high modulus of elasticity, such as a spring. FIG. 6 illustrates the biasing device 123 implemented by a spring as an embodiment of the present invention. The biasing device 123 may provide a biasing force for a pivoting handle 151 (not shown). One end of the sliding shaft 120 may be connected to a shaft blade 127 which may include a cutting edge which may define a point in order to facilitate the breaking of glass.

FIG. 6 additionally illustrates that the sliding shaft 120 includes a first threaded portion 122 which may include threads formed on the exterior of the sliding shaft 120 and an end of the sliding shaft 120 to cooperate with a handle sleeve 160 and includes a second threaded portion 124 which may include threads formed on the exterior of the sliding shaft 120 positioned adjacent to the shaft blade 127 to cooperate and connect with the connecting cylinder 130.

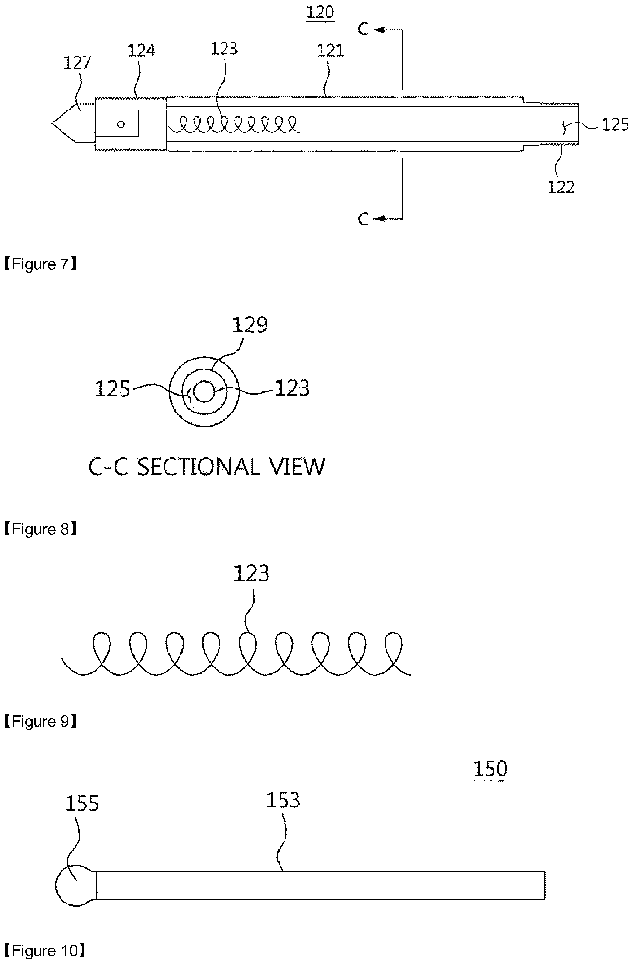

FIG. 7 is an end view illustrating the sliding shaft 120 which is an embodiment of a rotating shaft structure of a rotational axis part forming the damaging device of the fixed-type glass breaking apparatus according to the present invention. With reference to FIG. 7, the shaft aperture 125 is formed by a peripheral cylinder wall 129, and a biasing device 123 formed of a spring may cooperate with the shaft aperture 125 and may be positioned within the shaft aperture 125.

FIG. 8 is a side view illustrating a biasing device that may be positioned in a shaft aperture of a sliding shaft that is an embodiment of a rotating shaft structure of a rotational axis part composing a damaging device of the fixed-type glass breaking apparatus according to of the present invention. With reference to FIG. 8, the present invention may be provided using a biasing device 123 formed of a spring.

The fixed-type glass breaking apparatus according to the present invention may further include a handling device in addition to the attachment device and the damaging device.

The handling device is installed at the other end of the rotational axis part composing the damaging device in order for a user to easily apply a force for rotating the rotational axis part. For example, the handling device may include a handle sleeve which is threadably coupled to the other end of the rotational axis part, and a pivot handle connected to the handle sleeve.

Hereinafter, the handling device included in the fixed-type glass breaking apparatus according to the present invention will be described with reference to FIGS. 9 to 12.

FIGS. 9 to 15 illustrate an embodiment of a handling device. FIG. 9 illustrates a pivot handle according to an embodiment of the present invention, and FIGS. 10 to 12 illustrate a handle sleeve according to an embodiment of the present invention.

FIG. 9 is a view illustrating a pivot handle 150, and as shown in FIG. 9, the pivot handle 150 may include a pivot shaft 153 that may be formed of a solid or hollow cylinder. The pivot shaft 153 may have one end thereof connected to a sphere 155. The sphere 155 may have a diameter allowing the sphere 155 to be caught with a handle center aperture 167 of a handle sleeve 160 that will be described later.

With reference to FIGS. 10, 11 and 12, the handle sleeve 160 includes a sidewall 163 which may extend around the periphery of the handle sleeve 160, and includes an end wall 165 which may connect with the sidewall 163 at only one end of the handle sleeve 160. The handle sleeve 160 may include the handle center aperture 167 which extends through the center of the handle sleeve 160 and may be terminated by the end wall 165. The end wall 165 may include a notch 169 which may extend to and down the sidewall 163. The inner surface of the sidewall 165 may include internal threads 166 to threadably connect to the threads 122 of the sliding shaft 120.

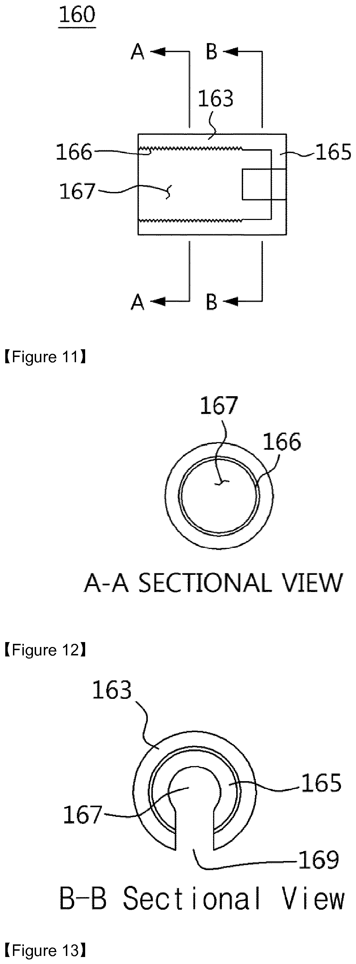

As for the handling device having the above-described structure, the pivot handle 150 passing through the handle sleeve 160 through a retaining plate, a cover and a pin device shown in FIGS. 13 to 18 is accommodated in the shaft aperture 125 of the sliding shaft 120 at normal times. At an emergency, the retaining plate, the cover and the pin device are removed, which causes the pivot handle 150 to be projected to the outside of the handle sleeve 160 through the biasing device 123, and the projected pivot handle 150 is pulled out for the sphere 153 to be caught at the end wall 165 and then is moved toward the notch 169 so as to be substantially perpendicular to the sliding shaft 120, and then the projected pivot handle 150 is rotated, so that the sliding shaft 120 is rotated with respect to the attachment plate 100 while damaging a surface of tempered glass, thereby breaking the glass as a whole. In particular, the above-described structure provides a leverage effect corresponding to the length of the pivot handle 150, so that the sliding shaft 120 may be rotated using a small force.

Hereinafter, the retaining plate, the cover, and the pin device are described with reference to FIGS. 13 to 18.

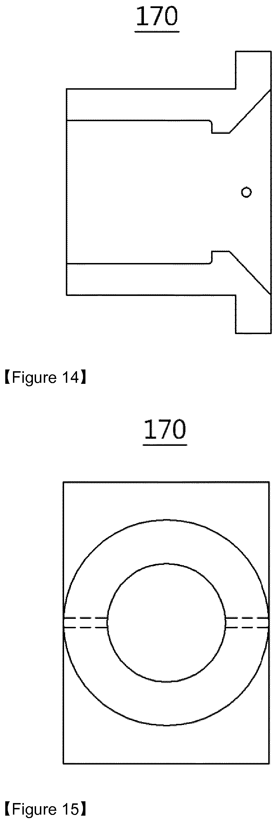

FIG. 13, 14 and 15 illustrate an embodiment of the retaining plate 170, in which FIG. 13 may not precisely match with FIGS. 14 and 15. As shown in FIGS. 13 to 15, the retaining plate 170 according to an embodiment may include a cylindrical structure allowing the handle sleeve 160 to pass therethrough and a plate shape structure configured to support the cover 180 at one end of the cylindrical structure. The plate shape structure has a upper surface through hole that communicates with a hollow part of the cylindrical structure, and may have a side surface through hole allowing the pin device to pass therethrough as shown in FIG. 15.

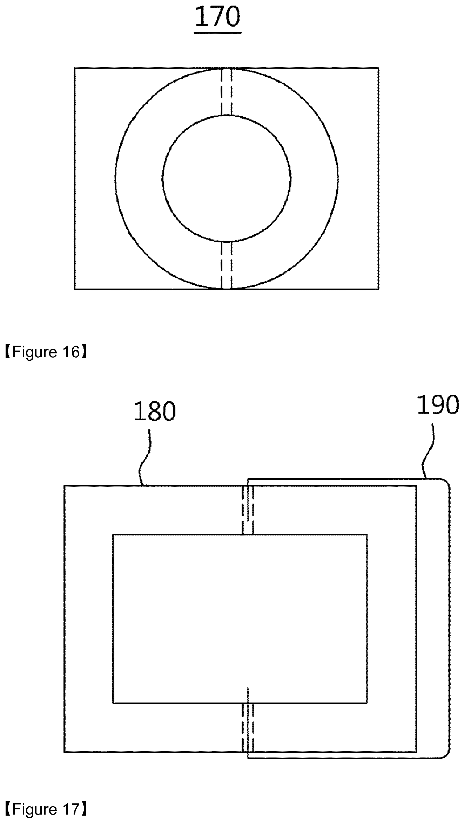

FIGS. 16 to 18 illustrate a cover and a pin device according to an embodiment. FIG. 16 illustrates a cover 180 covering the retaining plate 170 and a pin device 190 cooperating with the cover 180. Referring to FIG. 17, the cover 180 may have a structure including grooves in which a plate shape structure of the retaining plate 170, an upper end of the handle sleeve 160 passing through a circular structure of the retaining plate 170, and an upper end of the pivot handle 150 inserted into the handle sleeve 160 while penetrating the handle sleeve 160 are sequentially inserted. In addition, at a certain position of the cover 180 corresponding to a side surface penetration hole of the retaining plate 170, a side surface penetration hole through which the pin device 190 penetrates may be formed.

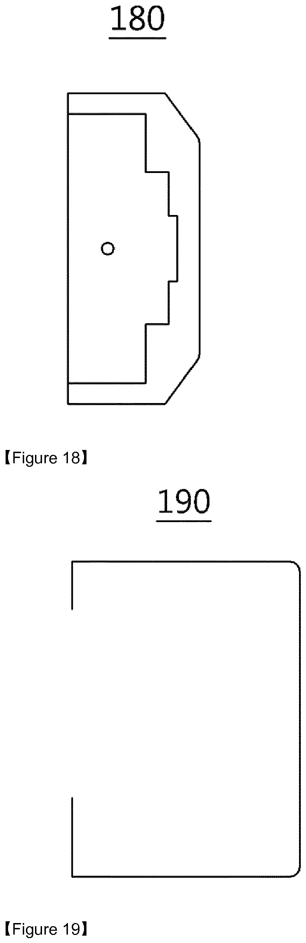

FIG. 19 is an exploded view illustrating an embodiment of the fixed-type glass breaking apparatus 10 according to the present invention.

With reference to FIG. 19, the attachment plate 100 installed such that at least a part thereof is in surface contact with a surface of reinforced glass, the connecting cylinder 130 which may be threadably connected to the attachment plate 100 by the threaded portion 133, a nut 138 connected to the threaded portion 133 in surface contact with the attachment plate 100 such that the attachment plate 100 and the connecting cylinder 130 are firmly fastened in the threadably connected state, the sliding shaft 120 threadably connected to the threads 134 of the connecting cylinder 130 with the attachment plate 100 and the connecting cylinder 130 firmly fastened so that the shaft blade 127 is provided at a predetermined position of the cylinder aperture 135 of the connecting cylinder 130, the biasing device 123 biasing the pivot handle 150 accommodated in the shaft aperture 125 of the sliding shaft 120, the pivot handle 150 accommodated in the shaft aperture 125 in addition to the biasing device 120, the handle sleeve 160 threadably connected to one end of the sliding shaft 120 and through which the pivot handle 150 penetrates, the retaining plate 171 covered by the cover 180 while surrounding the handle sleeve 160, and the pin device 190.

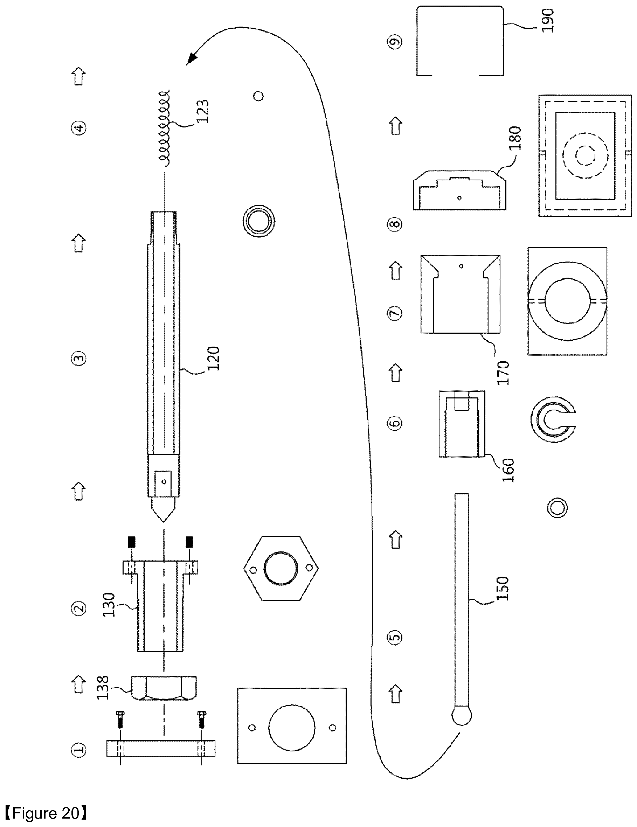

With reference to FIG. 20, the fixed-type glass breaking apparatus 10 according to the present invention may be assembled and installed to be perpendicular to a surface of tempered glass that composes a window. If necessary, the nut 138 may be omitted, and the connecting cylinder 130 may be also omitted. When the connecting cylinder 130 is omitted, the attachment plate 100 may be provided in a plate type three dimensional structure to enhance the engagement force between the attachment plate 100 and the sliding shaft 120. Although not shown, a support element may be added between the retaining plate 171 and the multi-sided flange 131 of the connecting cylinder 130 to support the retaining plate 170.

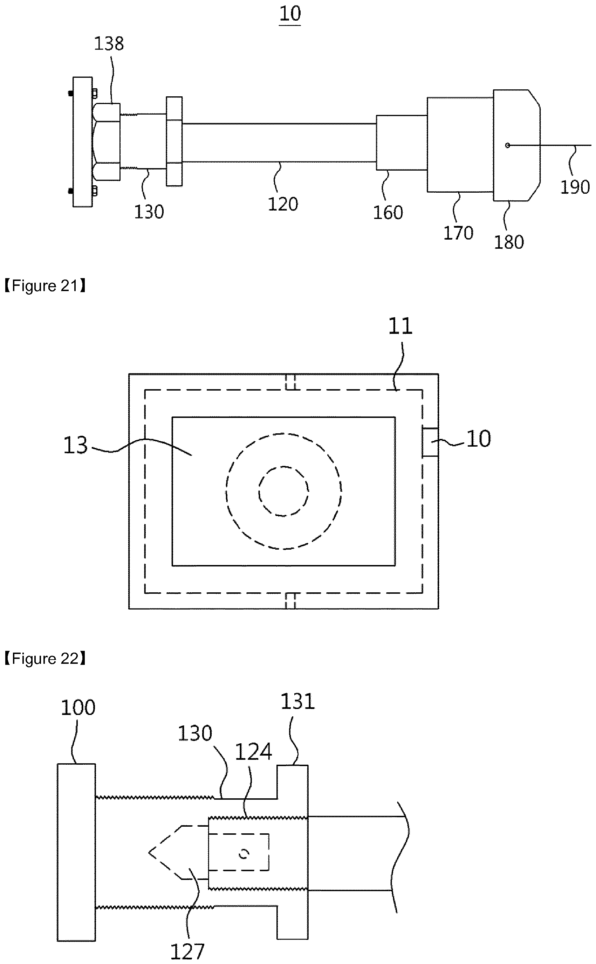

FIG. 21 is a view illustrating the fixed-type glass breaking apparatus 10 according to the present invention installed on the window. As shown in FIG. 21, the window frame 11 for fixing a window 13 that extends to the window frame 11 is installed, and the fixed-type glass breaking apparatus 10 is mounted on the window frame 11 in a perpendicular direction to the window 13 while in surface contact with the window 13.

With reference to FIG. 21, the fixed-type glass breaking apparatus according to the present invention installed as shown in FIG. 21 has a first position in which the attachment plat 100 is pulled backward to be prevented from contact with a surface of the tempered glass, allowing the shaft blade 127 of the sliding shaft 120 to be in a loaded position.

Meanwhile, at an emergency, the retaining plate and the cover are removed by removing the pin device, and the pivot handle is turned to rotate the sliding shaft, which leads to a second position in which the shaft blade 127 of the sliding shaft 120 extends passing the attachment plate 100, thereby causing the surface of tempered glass to be broken.

As described above, the rotational axis part may move between the first position making no contact with a surface of tempered glass and the second position making contact with a surface of tempered glass by being rotated by the handling device to form a crack.

As described above, the fixed-type glass breaking apparatus 10 according to the present invention is provided with a safety cover and a pin device for the safety of children. By adjusting the length of the tool, the fixed-type glass breaking apparatus 10 according to the present invention can be installed into any existing window.

In particular, when a plurality of window exist in a single passenger carriage, such as a train, the fixed-type glass breaking apparatus 10 may be not installed on all of the plurality of windows but on a certain position among the plurality of windows.

## Claims

1. A fixed-type glass breaking apparatus (10) for breaking tempered glass composing a window of a vehicle, the fixed-type glass breaking apparatus comprising:
an attachment device configured to be installed such that at least a part thereof is in surface contact with a surface of the tempered glass (13); and
a damaging device mounted in the attachment device, wherein the damaging device is in a perpendicular direction to the surface of the tempered glass (13) when the surface of the tempered glass (13) is in surface contact with the attachment device, the damaging device being configured to form a crack on the tempered glass surface,
wherein the damaging device includes a rotational axis part which is coupled to the attachment device to rotate with respect to the attachment device, and a cutting edge part (127) which is installed on one end of two ends of the rotational axis part, said one end being adjacent to the attachment device;
wherein the apparatus (10) further comprises a handling device which is installed at the other end of the rotational axis part in order to apply a force for rotating the rotational axis part;
**characterized in that**
the handling device includes a handle sleeve (160) which is threadably coupled to the other end of the rotational axis part (120), and a pivot handle (150) connected to the handle sleeve (160),
wherein the rotational axis part further has a hollow part (125) into which the pivot handle (150) is inserted, wherein the hollow part (125) has a biasing device (123) inserted therein.

2. The fixed-type glass breaking apparatus according to claim 1, wherein the attachment device comprises a part configured to be inserted into a frame (11) composing a window of the tempered glass surface (13).

3. The fixed-type glass breaking apparatus according to claim 1, wherein the attachment device is a plate (100) having a certain thickness or a plate type three dimensional structure that includes a top plate (101) which is spaced apart from a bottom plate (103) configured to be in surface contact with the tempered glass surface in parallel to the bottom plate (103) so that an interior space is formed, wherein the plate or the plate type three dimensional structure has a through hole (111) to which the damaging device is mounted.

4. The fixed-type glass breaking apparatus according to claim 1,wherein the rotational axis part includes a support cylinder structure (130) having a thread portion (133) formed on the exterior surface thereof to be threadably coupled with the attachment device, and a rotating shaft structure (120) which is threadably coupled with threads (134) formed at an inside hollow part (135) of the support cylinder structure (130).

5. The fixed-type glass breaking apparatus according to any one of claims 1 to 4, wherein, when the surface of the tempered glass (13) is in surface contact with the attachment device, the rotational axis part can be moved between a first position which is not in contact with the tempered glass surface and a second position which is in contact with the tempered glass surface through a rotation by the handling device to form a crack.

## Patentansprüche

1. Befestigbare Glasbrechvorrichtung (10) zum Brechen von getempertem Glas, das ein Fenster eines Fahrzeugs bildet, welche befestigbare Glasbrechvorrichtung aufweist:
eine Anbringungsvorrichtung, die konfiguriert ist, derart installiert zu werden, dass zumindest ein Teil hiervon in Oberflächenkontakt mit einer Oberfläche des getemperten Glases (13) ist; und
eine Beschädigungsvorrichtung, die an der Anbringungsvorrichtung befestigt ist, wobei die Beschädigungsvorrichtung in einer senkrechten Richtung zu der Oberfläche des getemperten Glases (13) ist, wenn die Oberfläche des getemperten Glases in Oberflächenkontakt mit der Anbringungsvorrichtung ist, wobei die Beschädigungsvorrichtung konfiguriert ist, einen Riss in der getemperten Glasoberfläche zu bilden,
wobei die Beschädigungsvorrichtung ein Drehachsenteil, das mit der Anbringungsvorrichtung gekoppelt ist, um sich mit Bezug auf die Anbringungsvorrichtung zu drehen, und ein Messerteil (127), das an einem Ende von zwei Enden des Drehachsenteils installiert ist, wobei das eine Ende benachbart der Anbringungsvorrichtung ist, enthält;
wobei die Vorrichtung (10) weiterhin eine Handhabungsvorrichtung aufweist, die an dem anderen Ende des Drehachsenteils installiert ist, um eine Kraft zum Drehen des Drehachsenteils auszuüben;
**dadurch gekennzeichnet, dass**
die Handhabungsvorrichtung eine Handgriffmanschette (160), die mit dem anderen Ende des Drehachsenteils (120) schraubgekoppelt ist, und einen Schwenkhandgriff (150), der mit der Handgriffmanschette (160) verbunden ist, enthält,
wobei der Drehachsenteil weiterhin einen hohlen Bereich (125) hat, in den der Schwenkhandgriff (150) eingesetzt ist, wobei der hohle Bereich (125) eine in diesen eingesetzte Vorspannvorrichtung 8123) hat.

2. Befestigbare Glasbrechvorrichtung nach Anspruch 1, bei der die Anbringungsvorrichtung ein Teil aufweist, das konfiguriert ist, in einen Rahmen (11), der ein Fenster mit der getemperten Glasoberfläche (13) bildet, eingesetzt zu werden.

3. Befestigbare Glasbrechvorrichtung nach Anspruch 1, bei der die Anbringungsvorrichtung eine Platte (100) mit einer bestimmten Dicke oder eine dreidimensionale Struktur vom Plattentyp ist, die eine obere Platte (101) enthält, die einen Abstand von einer unteren Platte (103) hat, die konfiguriert ist, in Oberflächenkontakt mit der getemperten Glasoberfläche parallel zu der unteren Platte (103) zu sein, so dass ein innerer Raum gebildet wird, wobei die Platte oder die dreidimensionale Struktur vom Plattentyp ein Durchgangsloch (111) hat, an dem die Beschädigungsvorrichtung befestigt ist.

4. Befestigbare Glasbrechvorrichtung nach Anspruch 1, bei der das Drehachsenteil eine Stützzylinderstruktur (130) mit einem Schraubbereich (133), der auf der äußeren Oberfläche hiervon gebildet ist, um mit der Anbringungsvorrichtung schraubgekoppelt zu werden, und eine Drehwellenstruktur (120), die mit einem an einem inneren hohlen Bereich (135) der Stützzylinderstruktur (130) gebildeten Gewinde (134) schraubgekoppelt ist, enthält.

5. Befestigbare Glasbrechvorrichtung nach einem der Ansprüche 1 bis 4, bei der, wenn die Oberfläche des getemperten Glases (13) in Oberflächenkontakt mit der Anbringungsvorrichtung ist, das Drehachsenteil zwischen einer ersten Position, die nicht in Kontakt mit der getemperten Glasoberfläche ist, und einer zweiten Position, die in Kontakt mit der getemperten Glasoberfläche ist, durch eine Drehung durch die Handhabungsvorrichtung bewegt werden kann, um einen Riss zu bilden.

## Revendications

1. Appareil pour briser le verre du type fixe (10) pour briser du verre trempé qui compose une vitre d'un véhicule, l'appareil pour briser le verre du type fixe comprenant :
un dispositif de fixation qui est configuré de manière à ce qu'il soit installé de telle sorte qu'au moins une partie de celui-ci soit en contact de surface avec une surface du verre trempé (13) ; et
un dispositif d'endommagement qui est monté dans le dispositif de fixation, dans lequel le dispositif d'endommagement est selon une direction perpendiculaire par rapport à la surface du verre trempé (13) lorsque la surface du verre trempé (13) est en contact de surface avec le dispositif de fixation, le dispositif d'endommagement étant configuré de manière à ce qu'il forme une fissure sur la surface de verre trempé ; dans lequel :
le dispositif d'endommagement inclut une partie d'axe de rotation qui est couplée au dispositif de fixation de manière à ce qu'elle soit entraînée en rotation par rapport au dispositif de fixation, et une partie de bord de coupe (127) qui est installée sur une extrémité de deux extrémités de la partie d'axe de rotation, ladite une extrémité étant adjacente au dispositif de fixation ; dans lequel :
l'appareil (10) comprend en outre un dispositif de manipulation qui est installé au niveau de l'autre extrémité de la partie d'axe de rotation afin d'appliquer une force pour entraîner en rotation la partie d'axe de rotation ;
**caractérisé en ce que** :
le dispositif de manipulation inclut un manchon de manipulation (160) qui est couplé par vissage à l'autre extrémité de la partie d'axe de rotation (120), et un moyen de manipulation par pivotement (150) qui est connecté au manchon de manipulation (160) ; dans lequel :
la partie d'axe de rotation comporte en outre une partie creuse (125) à l'intérieur de laquelle le moyen de manipulation par pivotement (150) est inséré, dans lequel la partie creuse (125) comporte un dispositif de sollicitation par poussée (123) qui est inséré en son sein.

2. Appareil pour briser le verre du type fixe selon la revendication 1, dans lequel le dispositif de fixation comprend une partie qui est configurée de manière à ce qu'elle soit insérée à l'intérieur d'un châssis (11) qui compose une fenêtre de la surface de verre trempé (13).

3. Appareil pour briser le verre du type fixe selon la revendication 1, dans lequel le dispositif de fixation est une plaque (100) qui présente une certaine épaisseur ou une structure tridimensionnelle du type plaque qui inclut une plaque de sommet (101) qui est espacée d'une plaque de fond (103), laquelle plaque de sommet est configurée de manière à ce qu'elle soit en contact de surface avec la surface de verre trempé en parallèle à la plaque de fond (103) de telle sorte qu'un espace intérieur soit formé, dans lequel la plaque ou la structure tridimensionnelle du type plaque comporte un trou traversant (111) sur lequel le dispositif d'endommagement est monté.

4. Appareil pour briser le verre du type fixe selon la revendication 1, dans lequel la partie d'axe de rotation inclut une structure de cylindre de support (130) qui comporte une section à filet(s) (133) qui est formée sur sa surface extérieure de manière à ce qu'elle soit couplée par vissage avec le dispositif de fixation, et une structure d'arbre pouvant être entraînée en rotation (120) qui est couplée par vissage avec des filets (134) qui sont formés au niveau d'une partie creuse intérieure (135) de la structure de cylindre de support (130).

5. Appareil pour briser le verre du type fixe selon l'une quelconque des revendications 1 à 4, dans lequel, lorsque la surface du verre trempé (13) est en contact de surface avec le dispositif de fixation, la partie d'axe de rotation peut être déplacée entre une première position qui n'est pas en contact avec la surface de verre trempé et une seconde position qui est en contact avec la surface de verre trempé par l'intermédiaire d'une rotation au moyen du dispositif de manipulation de manière à former une fissure.
